# EUROPEAN PATENT SPECIFICATION

(11) **EP 0 864 720 B1**
(45) Date of publication and mention of the grant of the patent: **05.11.2003**
(21) Application number: 98104120.5
(22) Date of filing: 09.03.1998
(51) Int. Cl.: E05F 15/12, E05F 11/06, E05F 15/10

(54) **Articulated-chain actuator**
Kettenantrieb
Transmission par chaîne

(30) Priority: 14.03.1997 IT PD970051
(43) Date of publication of application: 16.09.1998
(73) Proprietor: Topp S.r.l., 36042 Breganze (Vicenza) (IT)
(72) Inventor: Galliazzo, Giuliano, 36042 Breganze (Vicenza) (IT)
(74) Representative: Modiano, Guido, Dr.-Ing.

(56) References cited:
- EP-A- 0 534 413
- EP-A- 0 600 105
- DE-A- 4 331 781
- US-A- 4 383 206
- US-A- 5 105 131

## Description

The present invention relates to an articulated-chain actuator particularly but not exclusively useful for moving casements, according to the first part of claim 1 (compare with DE-A-4 331 781).

It is known that in the field of the movement and opening and closure of casements, characteristics providing automation in closing and opening are particularly appreciated; these characteristics are useful if not indeed 'necessary in particular operating conditions.

Casements with automatic closure or opening are in fact required when they are difficult to access or when their movement is not particularly easy for the user.

In order to provide the opening or closing movement of casements, chain actuators have been devised which usually comprise, within a box-like casing, a chain which is guided so as to slide by guides along a preset path leading outside through an opening formed in said box-like casing.

The chain has a free end which is associated with anchoring means for connection to a body to be moved and is coupled to a pinion connected to motor means.

In currently commercially available chain actuators, the action of the chain is stopped by means of stroke-limiting microswitches.

However, such a stop device entails considerable drawbacks, since especially in shutter and tilt-down casements it is not possible to provide preset intermediate positions.

The aim of the present invention is to provide a chain actuator which solves the above-cited drawbacks of conventional chain actuators, particularly allowing a graduated opening or closing action of the casements on which they are installed.

Within the scope of this aim, an important object of the present invention is to provide a chain actuator in which the electronic components are effectively protected and fully free from possible damage induced by the movement of the chain.

Another object of the present invention is to provide a chain actuator which is very compact and thus entails a reduced aesthetic impact on the casement.

Another object of the present invention is to provide a chain actuator whose costs are competitive with respect to conventional actuators.

This aim, these objects and others which will become apparent hereinafter are achieved by an articulated-chain actuator according to claim 1.

Further characteristics and advantages of the actuator according to the present invention will become apparent from the following detailed description of an embodiment thereof, illustrated only by way of non-limitative example in the accompanying drawings, wherein:
Figure 1 is a perspective view of an actuator according to the invention, applied to a casement;
Figure 2 is a perspective view of part of the actuator of Figure 1;
Figure 3 is a sectional view of the actuator of Figure 1;
Figure 4 is a sectional lateral view of the actuator of Figure 1;
Figures 5 and 6 are sectional orthographic projection views of corresponding details of the actuator of Figure 1;
figures 7 and 8 are respectively a plan and a lateral view of a same detail of the actuator of Figure 1;
Figures 9 and 10 are views of another detail of the actuator of Figure 1;
Figures 11 and 12 are respectively a lateral and a plan view of corresponding details of the actuator in a different embodiment.

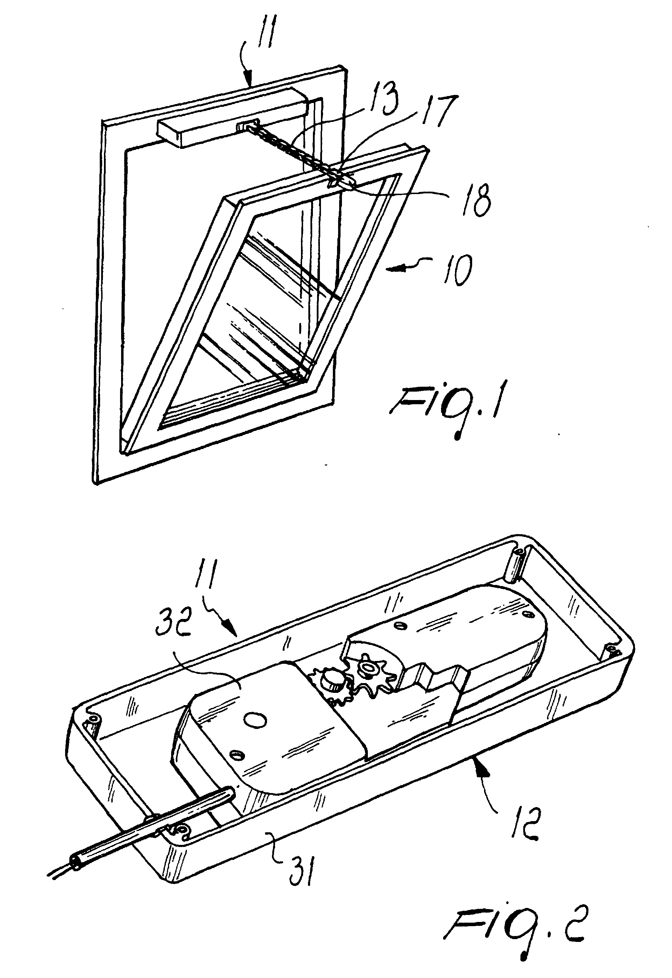

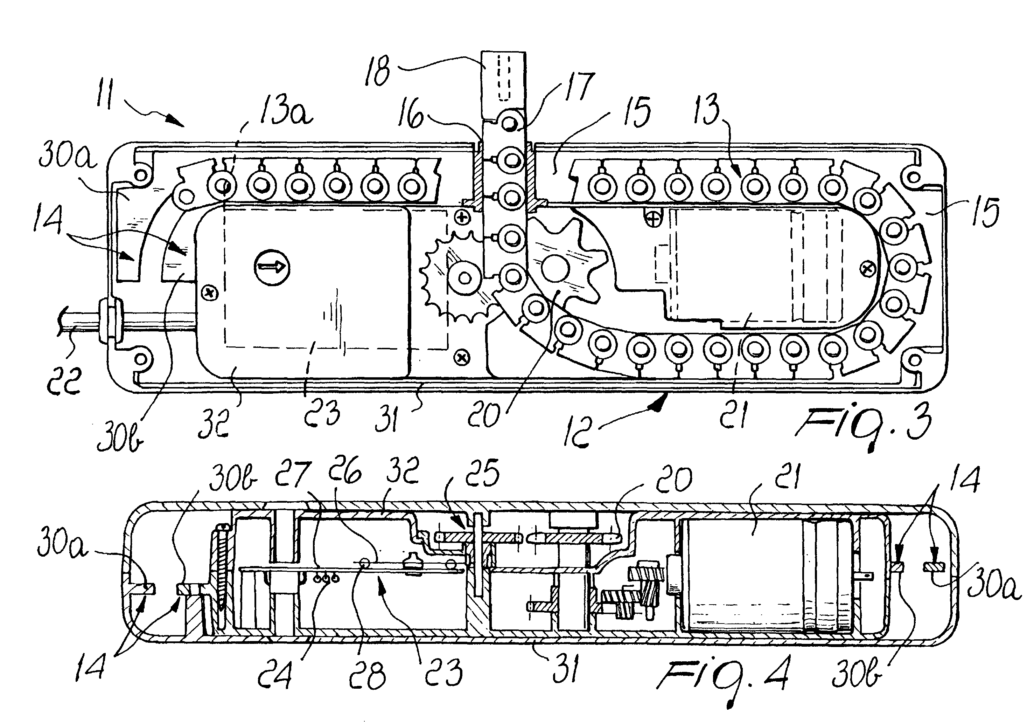

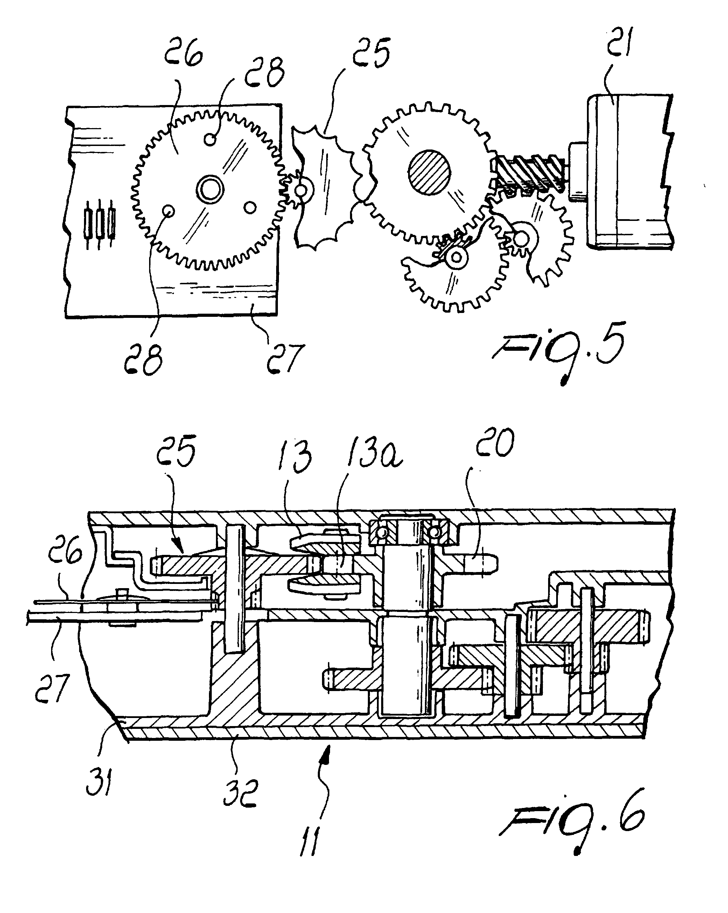

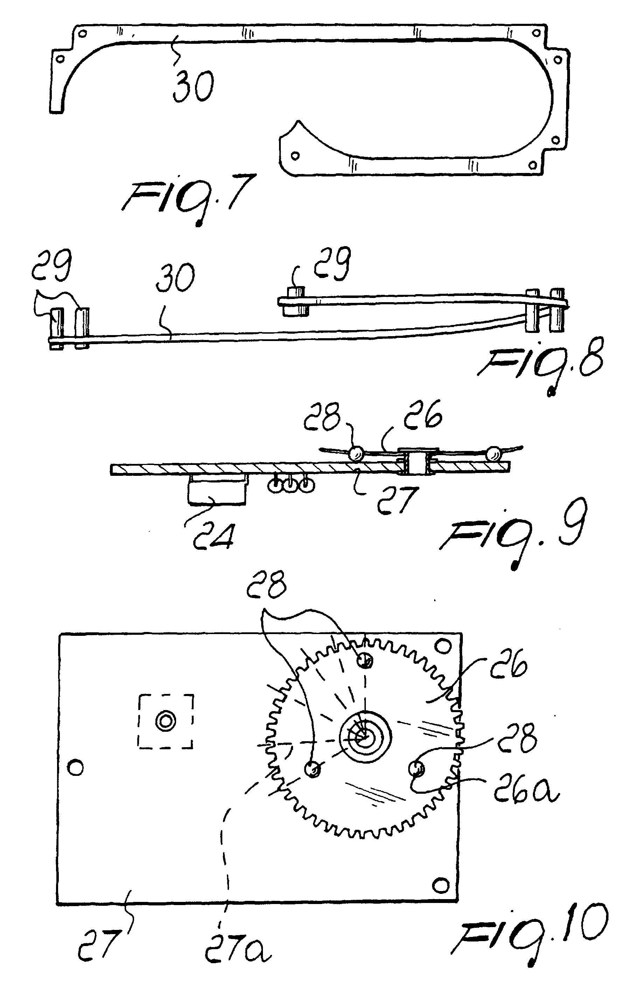

With particular reference to Figures 1 to 10, a chain actuator according to the present invention, applied to a casement 10, is generally designated by the reference numeral 11.

The actuator 11 comprises, inside a box-like casing generally designated by the reference numeral 12, a chain 13 which is guided so as to slide between guides, generally designated by the reference numeral 14, along a preset path 15 leading outside through an opening 16 which is formed in said box-like casing 12, as described in greater detail hereinafter.

The chain 13 has an end 17 which is associated with anchoring means, generally designated by the reference numeral 18, for connection to the body to be moved, which in this case, as mentioned, is a shutter of the casement 10.

The chain 13 is also coupled to a pinion 20 connected to motor means, designated by the reference numeral 21, which are in turn connected to the electric power supply by means of a cable 22.

The actuator 11 comprises, within the box-like casing 12, an encoder, generally designated by the reference numeral 23, which is associated with a switch 24 provided on the printed circuit. The switch and the encoder are suitable to adjust and control the activation/deactivation of the motor means 21 and are accordingly also suitable to stop the chain 13 in preset chosen positions.

In particular, the encoder 23 is connected to the pinion 20 through a gear set generally designated by the reference numeral 25.

The encoder 23 can, in this case, adjust the stroke over a plurality of positions (determined by the length of a link of chain) and it is also possible to provide for coupling with a microcontroller in order to achieve self-learning of the stroke limit through current absorption.

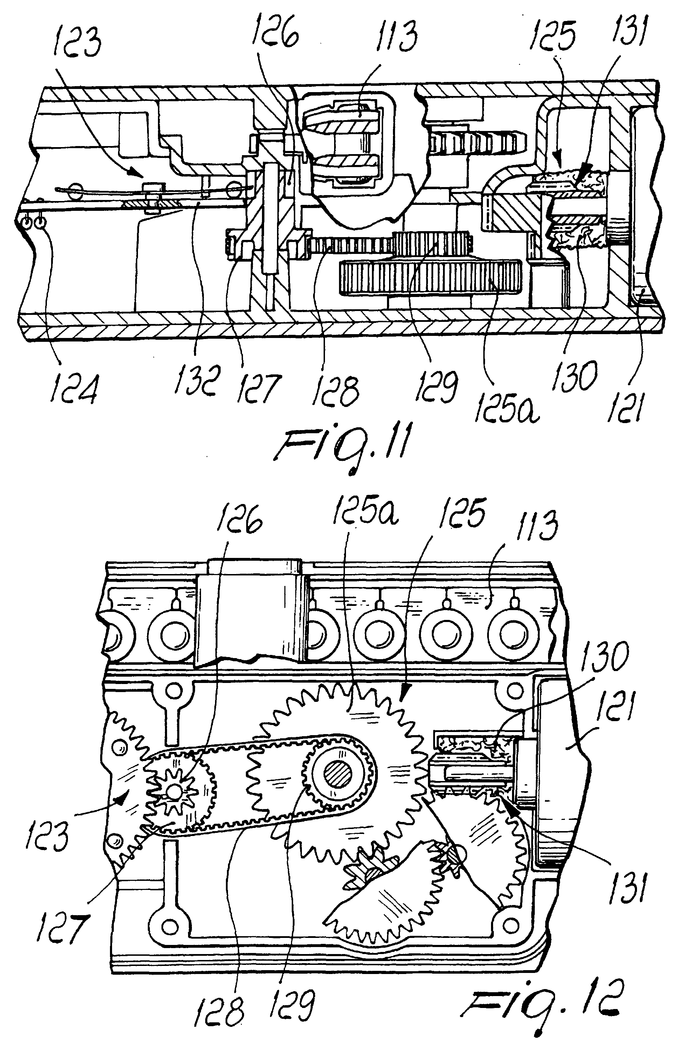

In this case too, the encoder 23 is constituted by a toothed disk 26 which meshes with the gear set 25 and is rotatably supported by an electronic base 27 provided with electric pathways with radial terminals (only some of which are designated by dashed lines 27a in Figure 10) at the region covered by said toothed disk 26.

In particular, the toothed disk 26 is provided with three through holes 26a which are mutually equidistant and are suitable to form seats for three corresponding balls 28 suitable to provide the electrical connection between the contacts and the disk 26.

The balls 28 have a larger diameter than the holes 26a, so as to keep said disk 26 deformed elastically in contrast with the base 27, so that the elastic reaction of said disk ensures the continuity of the electrical contact between the balls 28 and the contacts.

As regards the guides 14, the box-like casing 12 is internally associated, by means of pivots 29, with a first rail-like element which has a contoured spiral-shaped longitudinal extension 30a and is suitable to cooperate to form, for the chain 13, the above-mentioned path 15, which is thus also substantially spiral-shaped with an intersection (although on different planes); this allows to contain the overall dimensions of the actuator 11.

A second rail-like element 30b is instead monolithic with the internal box-like casing, as specified in greater detail hereinafter.

The chain 13 is thus supported and guided between the rails 30a and 30b, which have the same orientation since they are mutually spaced by an extent which is substantially equal to the diameter of the pins 13a of said chain.

In relation to the spiral-shaped orientation of the chain 13, the opening 16 is formed in a median region of the box-like casing 12.

In particular, in this embodiment the casing 12 is composite and is constituted by a first external box-like body 31 made of aluminum, for containing the chain 13 and for the mechanical components, and by a second internal box-like body 32, also made of aluminum, for containing the electronic and electric components in general.

In other cases, however, the bodies 31 and 32 may be provided monolithically for example by molding plastics.

In practice, it has been observed that the present invention has solved the above drawbacks.

In particular, the adoption of an encoder associated with a trigger allows to gradually adjust the movement of the chain and accordingly to just as gradually adjust the opening or closure of the casements to which the actuator is applied.

Moreover, the spiral-shaped (and intersecting) orientation of the chain of the actuator according to the invention inside the box-like casing allows to contain the outside dimensions thereof, with a great advantage in terms of bulk and of the aesthetic impact that it can have on the casement.

The adoption of a double internal and external box-like casing and the inclusion of the electric and electronic components in the external casing makes it entirely free from damage induced by the movement of the chain and ensures double electrical insulation.

The present invention is susceptible of numerous modifications and variations, all of which are within the scope of the inventive concept; thus, for example, it can provide for the presence of a microcontroller for the motor means.

In another case, with particular reference to Figures 11 and 12, the encoder, now generally designated by the reference numeral 123 and again associated with a switch 124 formed on the printed circuit of the electronic base 132, both parts being suitable, in combination, to adjust and control the activation/deactivation of the motor means 121 and therefore also suitable to stop the chain 113 in preset chosen positions, meshes, by being externally provided with teeth, with a pinion 126 rigidly coupled to a toothed pulley 127.

The pulley is connected, by means of a toothed belt 128, to another toothed pulley 129 which is rigidly coupled to a gear 125a of a set of gears 125 from which the motion of the motor means 121 is taken; said gears also actuate the chain 113.

A lubrication felt 130, impregnated with lubricant, contains at least part of the worm screw reduction unit 131 which is located directly downstream of the motor means 121 and is part of the set of gears 125.

The details may also be replaced with other technically equivalent elements.

The materials and the dimensions may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An articulated-chain actuator (11), comprising within a box-like casing (12), a chain (13) which is guided so as to slide by guides (14) along a preset path (15) leading outside through an opening (16) formed in said box-like casing (12), said chain (13) having an end (17) which is associated with anchoring means (18) for connection to a body to be moved and being coupled to a pinion which is connected to motor means (21), an encoder (23) for adjusting and controlling the activation/deactivation of said motor means (21), said encoder (23) being suitable to stop said chain in preset chosen positions, **characterized in that** said encoder (23) is connected to said pinion by a gear set (25) and is constituted by a toothed disk (26) which meshes with said gear set (25) and is rotatably supported by an electronic base provided with contacts and electric pathways with radial terminals (27a) at a region covered by said toothed disk, said disk being provided with mutually equidistant through holes (26a) suitable to form seats for corresponding balls (28) which provide the electrical connection between said terminals.

2. An actuator according to claim 1, **characterized in that** it comprises a trigger for adjusting the activation/deactivation of said motor means which is associated with said encoder.

3. An actuator according to claim 1, **characterized in that** said balls have a larger diameter than said holes, so as to keep said disk deformed elastically in contrast with said base, so that the elastic reaction of said disk ensures the continuity of the electrical contact between said balls and said terminals.

4. An actuator according to claim 1, **characterized in that** in said box-like casing at least one rail-like element is provided which has a spiral-shaped contoured longitudinal extension and is adapted to cooperate in forming the path of said chain, which is also substantially spiral-shaped with an intersection, although on different planes.

5. An actuator according to claim 4, **characterized in that** said chain is supported and guided between two rails having the same orientation and mutually spaced by an extent which is substantially equal to the diameter of pins of said chain.

6. An actuator according to claim 4, **characterized in that** said chain leads outside in a median region of said box-like casing.

7. An actuator according to claim 1, **characterized in that** it comprises a composite box-like casing constituted by a first external box-like containment body for said chain and for the mechanical components and by a second internal box-like body for containing electronic and electric components so as to provide separation from the regions for the sliding of said chain.

8. An actuator according to claim 7, **characterized in that** said box-like casing is made of aluminum or equivalent metallic material.

9. An actuator according to claim 1, **characterized in that** said box-like casing has a first external box-like body for the mechanical components and a second internal box-like body for the electronic components, said bodies being mutually monolithic and being made of plastics.

10. An actuator according to claim 1, **characterized in that** it has a microcontroller for the activation/deactivation of said motor means.

11. An actuator according to claim 1, **characterized in that** said encoder meshes, by being externally provided with teeth, with a pinion which is rigidly coupled to a toothed pulley which is in turn connected by means of a toothed belt to another toothed pulley which is rigidly coupled to a gear of a gear set from which the motion of said motor means is taken.

12. An actuator according to claim 11, **characterized in that** a lubrication felt impregnated with lubricant contains at least part of a worm-screw reduction unit which is part of the gear set arranged downstream of said motor means.

## Patentansprüche

1. Gelenkketten-Stellantrieb (11) umfassend innerhalb eines kastenförmigen Gehäuses (12)
eine Kette (13), die derart geführt ist, dass sie durch Führungen (14) einen vorgegebenen Weg (15) entlang gleitet, der durch eine Öffnung (16), die in dem kastenförmigen Gehäuse (12) ausgebildet ist, nach außen führt, wobei die Kette (13) ein Ende (17) aufweist, an dem Befestigungsmittel (18) für die Verbindung mit einem zu bewegenden Körper angebracht sind, und wobei die Kette (13) mit einem Getriebe gekoppelt ist, das mit einem Antriebsmittel (21) verbunden ist, und
einen Codeumsetzer (23) für die Einstellung und Regelung der Aktivierung/Deaktivierung des Antriebsmittels (21), wobei der Codeumsetzer (23) dazu bestimmt ist, die Kette in vorher festgelegten Positionen anzuhalten,
**dadurch gekennzeichnet, dass**
der Codeumsetzer (23) mit dem Getriebe über eine Zahnradanordnung (25) verbunden ist und eine gezähnte Drehscheibe (26) umfasst, die in die Zahnradanordnung (25) eingreift und die drehbar über einer elektronischen Grundplatte angeordnet ist, wobei die Grundplatte mit Kontakten und elektrischen Leitungen mit radialen Anschlussleisten (27a) in einem Bereich, der von der gezähnten Drehscheibe überdeckt wird, versehen ist, und
wobei die Drehscheibe mit wechselseitig zueinander gleich beabstandeten Durchgangslöchern (26a) versehen ist, die zur Aufnahme korrespondierender Kugeln (28) ausgebildet sind, die die elektrische Verbindung zwischen den Anschlussleisten ermöglichen.

2. Stellantrieb nach Anspruch 1,
**dadurch gekennzeichnet, dass**
der Stellantrieb eine Triggereinrichtung zum Einstellen der Aktivierung/Deaktivierung des Antriebsmittels umfasst, die an dem Codeumsetzter angeordnet ist.

3. Stellantrieb nach Anspruch 1,
**dadurch gekennzeichnet, dass**
dass die Kugeln einen größeren Durchmesser als die Löcher aufweisen, um die Drehscheibe gegenüber der Grundplatte elastisch verformt zu halten, so dass die elastische Reaktion der Drehscheibe die Aufrechterhaltung des elektrischen Kontakts zwischen den Kugeln und den Anschlussleisten sicherstellt.

4. Stellantrieb nach Anspruch 1,
**dadurch gekennzeichnet, dass**
in dem kastenförmigen Gehäuse wenigstens ein schienenartiges Element vorgesehen ist, das im Profil eine spiralförmige Längsausdehnung aufweist und derart ausgebildet ist, dass es zur Ausprägung des Weges der Kette beiträgt, wobei der Weg ebenfalls im Wesentlichen spiralförmig verläuft, mit einer Überschneidung, wenn auch auf verschiedenen Ebenen.

5. Stellantrieb nach Anspruch 4,
**dadurch gekennzeichnet, dass**
die Kette gelagert und geführt ist zwischen zwei Schienen, die die gleiche Orientierung aufweisen und die gegeneinander beabstandet sind mit einer Abstandsweite, die im Wesentlichen gleich dem Durchmesser der Bolzen der Kette ist.

6. Stellantrieb nach Anspruch 4,
**dadurch gekennzeichnet, dass**
die Kette in einem in der Mitte gelegenen Bereich des kastenförmigen Gehäuses nach außen geführt ist.

7. Stellantrieb nach Anspruch 1,
**dadurch gekennzeichnet, dass**
der Stellantrieb ein zusammengesetztes kastenförmiges Gehäuse umfasst, gebildet aus einem ersten äußeren kastenförmigen Behälterkörper für die Kette und die mechanischen Bauteile und einem zweiten inneren kastenförmigen Körper, der die elektronischen und elektrischen Bauteile enthält, um für eine Trennung von den Regionen zu sorgen, in denen die Kette gleitet.

8. Stellantrieb nach Anspruch 7,
**dadurch gekennzeichnet, dass**
das kastenförmige Gehäuse aus Aluminium oder einem entsprechenden metallischen Material hergestellt ist

9. Stellantrieb nach Anspruch 1,
**dadurch gekennzeichnet, dass**
das kastenförmige Gehäuse einen ersten äußeren kastenförmigen Körper für die mechanischen Bauteile und einen zweiten kastenförmigen Körper für elektronischen Bauteile aufweist, wobei die Körper jeweils monolithisch ausgebildet und aus Kunststoff hergestellt sind.

10. Stellantrieb nach Anspruch 1,
**dadurch gekennzeichnet, dass**
**der Stellantrieb einen** Mikrocontroller für die Aktivierung/Deaktivierung des Antriebsmittels umfasst.

11. Stellantrieb nach Anspruch 1,
**dadurch gekennzeichnet, dass**
der Codeumsetzer äußerlich mit Zähnen versehen ist und damit in ein Zahnrad eingreift, das starr mit einer gezähnten Riemenscheibe gekoppelt ist, die wiederum über einen mit Zähnen versehenen Riemen mit einer anderen gezähnten Riemenscheiben verbunden ist, die starr gekoppelt ist mit dem Zahnrad einer Zahnradanordnung, die die Bewegung des Antriebsmittels aufnimmt.

12. Stellantrieb nach Anspruch 11,
**dadurch gekennzeichnet, dass**
ein mit einem Schmiermittel getränkter Schmierfilz eine Gewindeschrauben-Untersetzungseinheit, die Teil der dem Antriebsmittel nachgeschalteten Zahnradanordnung ist, zumindest teilweise einbettet.

## Revendications

1. Actionneur à chaîne articulée (11), comprenant dans un gainage en forme de boite (12), une chaîne (13) qui est guidée de manière à coulisser au moyen de guides (14) le long d'un chemin prédéterminé (15) glissant à l'extérieur à travers une ouverture (16) formée dans ledit gainage en forme de boite (12), ladite chaîne ayant une extrémité (17) qui est associée à des moyens d'ancrage (18) pour la liaison à un corps à déplacer et étant couplée à un pignon qui est relié à des moyens moteurs (21), un codeur (23) pour le réglage et le contrôle de l'activation/désactivation des dits moyens moteur (21), ledit codeur (23) étant approprié pour arrêter la chaîne dans des positions choisies prédéterminées, **caractérisé en ce que** ledit codeur (23) est relié audit pignon par un jeu d'engrenages (25) et est constitué d'un disque denté (26) qui est compatible avec ledit jeu d'engrenages (25) et qui est supporté de façon rotative par une base électronique munie de contacts et de sentiers électriques avec bornes radiales (27a) au niveau d'une zone couverte par ledit disque denté, ledit disque étant muni de trous transversaux équidistants entre eux (26a) appropriés pour former des sièges pour des billes correspondantes (28) qui fournissent la liaison électrique entre lesdites bornes.

2. Actionneur selon la revendication 1, **caractérisé en ce qu'**il comprend un déclencheur pour le réglage de l'activation/désactivation du dit moyen moteur qui est associé audit codeur.

3. Actionneur selon la revendication 1, **caractérisé en ce que** lesdites billes ont un diamètre plus grand que lesdits trous, de façon à maintenir ledit disque élastiquement déformé par contraste avec ladite base, ainsi la réaction élastique du dit disque assure la continuité du contact électrique entre lesdits billes et lesdites bornes.

4. Actionneur selon la revendication 1, **caractérisé en ce que**, dans ledit gainage en forme de boite, au moins un élément en forme de rail est prévu qui a une extension longitudinale courbée en forme de spirale et est adapté pour coopérer en formant le chemin de ladite chaîne, qui est également sensiblement en forme de spirale avec une intersection, bien que sur des plans différents.

5. Actionneur selon la revendication 4, **caractérisé en ce que** ladite chaîne est supportée et guidée entre deux rails ayant la même orientation et mutuellement espacés par une extension qui est sensiblement égale au diamètre des picots de ladite chaîne.

6. Actionneur selon la revendication 4, **caractérisé en ce que** ladite chaîne coulisse à l'extérieur dans une zone médiane du dit gainage en forme de boite.

7. Actionneur selon la revendication 1, **caractérisé en ce qu'**il comprend un gainage en forme de boite composée constitué par un premier corps externe de contenance en forme de boite pour ladite chaîne et pour les pièces mécaniques et par un deuxième corps interne en forme de boite pour contenir des composants électriques et électroniques de façon à prévoir une séparation des zones pour le coulissement de ladite chaîne.

8. Actionneur selon la revendication 7, **caractérisé en ce que** ledit gainage en forme de boite est fait d'aluminium ou d'un matériau métallique équivalent.

9. Actionneur selon la revendication 1, **caractérisé en ce que** ledit gainage en forme de boite présente un premier corps externe en forme de boite pour des pièces mécaniques et un deuxième corps interne en forme de boite pour les composants électroniques, lesdits corps étant monolithiques entre eux et étant fait de plastiques.

10. Actionneur selon la revendication 1, **caractérisé en ce qu'**il présente un micro-contrôleur pour l'activation/désactivation du dit moyen moteur.

11. Actionneur selon la revendication 1, **caractérisé en ce que** ledit codeur est compatible, en étant muni extérieurement de dents, avec un pignon qui est couplé de manière rigide à une poulie dentée qui est à son tour reliée au moyen d'une courroie dentée à une autre poulie dentée qui est couplée de manière rigide à l'engrenage d'un jeu d'engrenages depuis lequel le mouvement du dit moyen moteur est exécuté.

12. Actionneur selon la revendication 11, **caractérisé en ce qu'**un feutre de lubrification imprégné d'un lubrifiant contient au moins une partie d'une unité de réduction par vis sans fin qui est partie du jeu d'engrenages agencé en aval du dit moyen moteur.
